# EUROPEAN PATENT APPLICATION

(11) **EP 3 904 826 A1**
(43) Date of publication of application: **03.11.2021**
(21) Application number: 19904965.1
(22) Date of filing: 18.12.2019
(51) Int. Cl.: G01C 3/06, G01S 17/42, G01S 17/93, G01S 7/486, G01S 7/497

(54) **DISTANCE MEASURING DEVICE AND DISTANCE MEASURING METHOD**

(30) Priority: 27.12.2018 JP 2018245389
(71) Applicant: Sony Semiconductor Solutions Corporation, Atsugi-shi, Kanagawa 243-0014 (JP)
(72) Inventor: TAYU, Kenichi, Atsugi-shi, Kanagawa 243-0014 (JP)
(74) Representative: Müller Hoffmann & Partner
(86) International application number: PCT/JP2019/049653
(87) International publication number: WO 2020/137754

(57) **Abstract**

A distance measurement device for further reducing error in distance measurement results is provided. A reflective object disposed at a position of a predetermined distance along a path of a light from a light source is included. Then, first, a first time measurement unit measures a first time from when first light is emitted from the light to when reflective light from the reflective object is received by a light-receiving element. Thereafter, a second time measurement unit measures a second time from when second light is emitted from the light source to when reflective light from a target 1 is received by the light-receiving element. Subsequently, a distance calculation unit calculates a distance from the light source to the target along a path of the second light on the basis of the predetermined distance, the first time, and the second time. Accordingly, calibration for a distance measurement result is performed.

## Description

### [Technical Field]

The present technology relates to a distance measurement device and a distance measurement method.

### [Background Art]

Recently, a distance measurement device that directly measures a distance to a target using time of flight (ToF) has been proposed (refer to PTL 1, for example). In such a distance measurement device, calibration for measurement results is generally performed at the time of shipping in order to reduce error in distance measurement results.

### [Citation List]

### [Patent Literature]

[PTL 1]
JP 2017-32355A

### [Summary]

### [Technical Problem]

However, in such a distance measurement device, further reduction of error in distance measurement results is required. An object of the present disclosure is to provide a distance measurement device and a distance measurement method for further reducing error in distance measurement results.

### [Solution to Problem]

A distance measurement device of the present disclosure includes (a) a light source that emits light, (b) a reflective object disposed at a position of a predetermined distance along a path of light from the light source, (c) a light-receiving element that receives respective reflective lights from the reflective object and a target on the path, (d) a first time measurement unit that measures a first time from when first light is emitted from the light source to when the reflective light from the reflective object is received by the light-receiving element, (e) a second time measurement unit that measures a second time from when second light is emitted from the light source to when the reflective light from the target is received by the light-receiving element, and (f) a distance calculation unit that calculates a distance from the light source to the target along a path of the second light on the basis of the predetermined distance, the first time, and the second time.

A distance measurement method of the present disclosure includes (a) measuring a first time from when first light is emitted from a light source to when reflective light from a reflective object disposed at a position of a predetermined distance along a path of the first light from the light source is received by a light-receiving element, (b) measuring a second time from when second light is emitted from the light source to when the reflective light from a target on a path of the second light is received by the light-receiving element, and (c) calculating a distance from the light source to the target along the path of the second light on the basis of the predetermined distance, the first time, and the second time.

### [Brief Description of Drawings]

[Fig. 1]

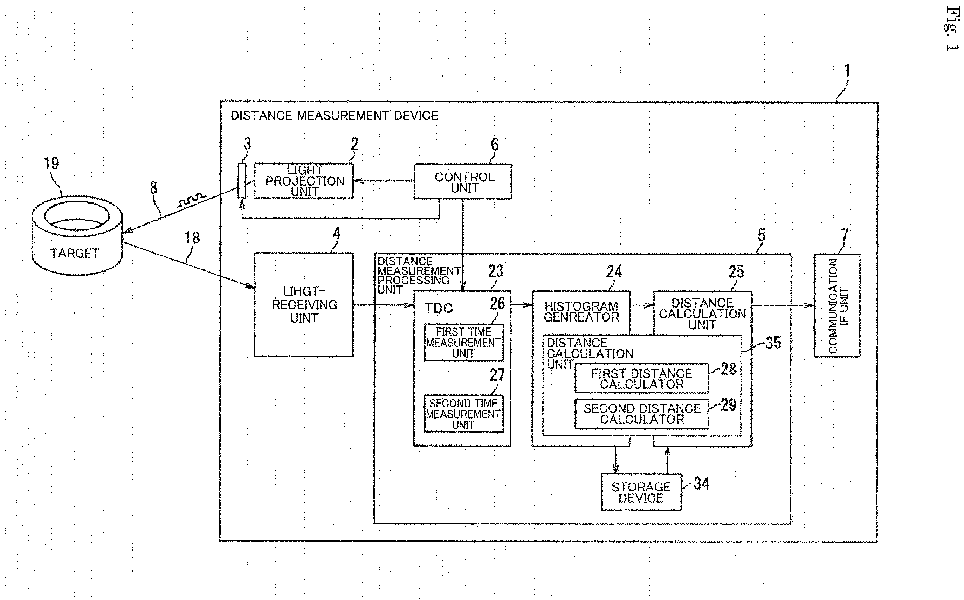

   Fig. 1 is a diagram illustrating an overall configuration of a distance measurement device according to a first embodiment of the present disclosure.
[Fig. 2]

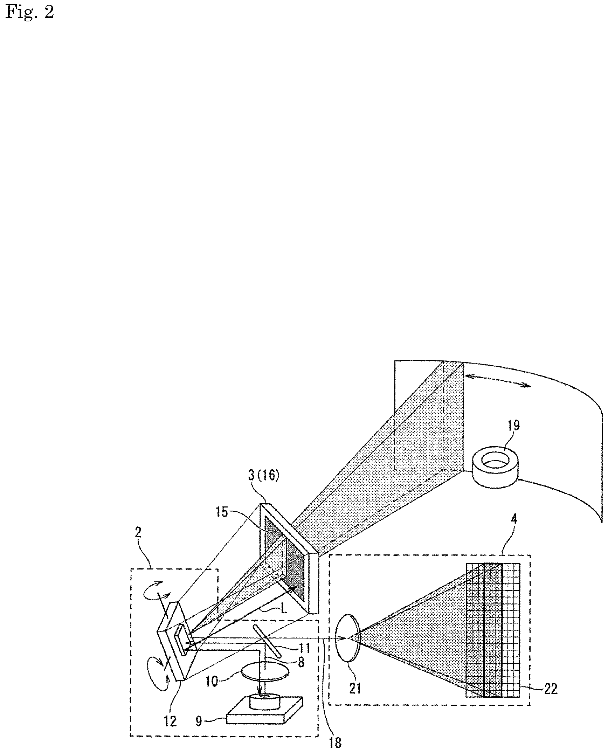

   Fig. 2 is a diagram illustrating a configuration of a light projection unit.
[Fig. 3A]

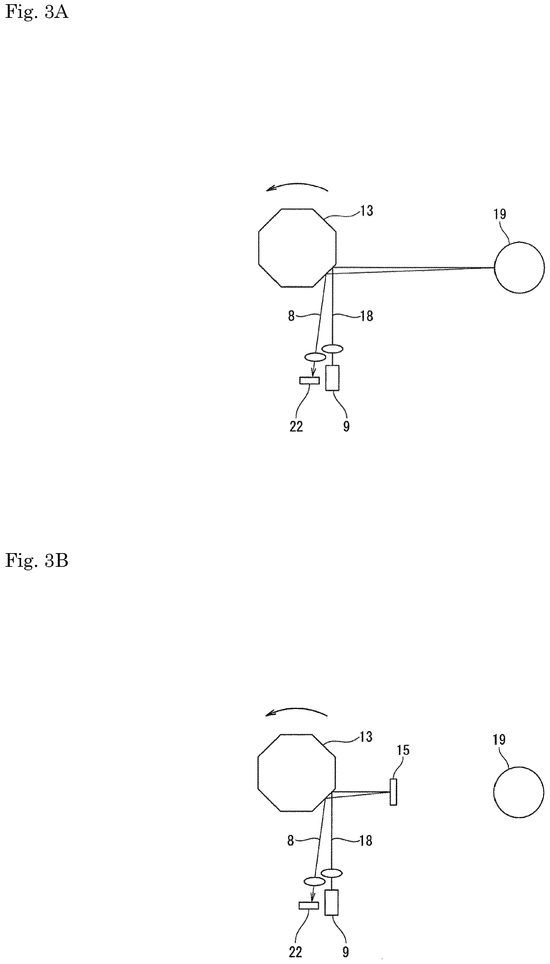

   Fig. 3A is a diagram illustrating a method of measuring a distance to a target using a polygon mirror type light projection unit in a distance measurement device according to a modified example.
[Fig. 3B]
   Fig. 3B is a diagram illustrating a method of measuring a distance to a reflective object using the polygon mirror type light projection unit in the distance measurement device according to the modified example.
[Fig. 4A]

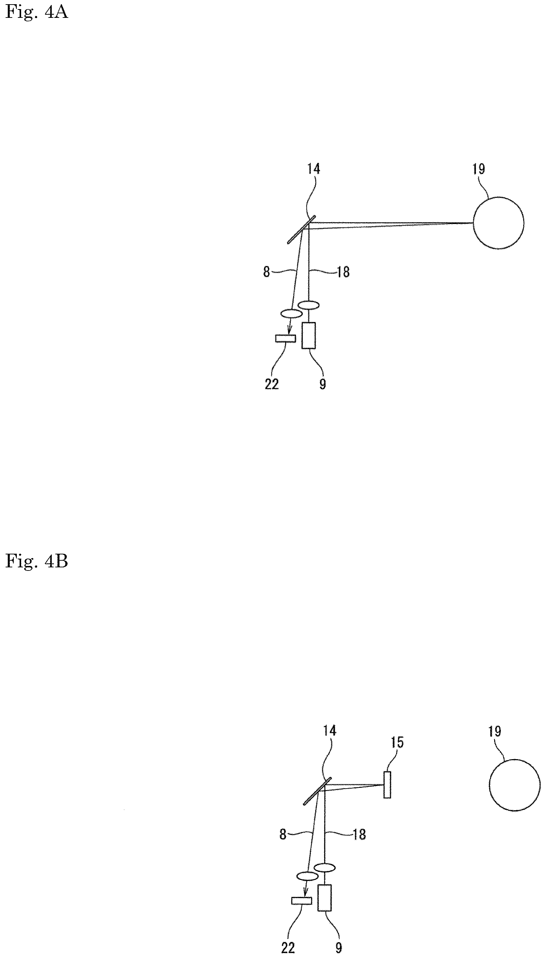

   Fig. 4A is a diagram illustrating a method of measuring a distance to a target using a MEMS mirror type light projection unit in a distance measurement device according to a modified example.
[Fig. 4B]
   Fig. 4B is a diagram illustrating a method of measuring a distance to a reflective object using the MEMS mirror type light projection unit in the distance measurement device according to the modified example.
[Fig. 5A]

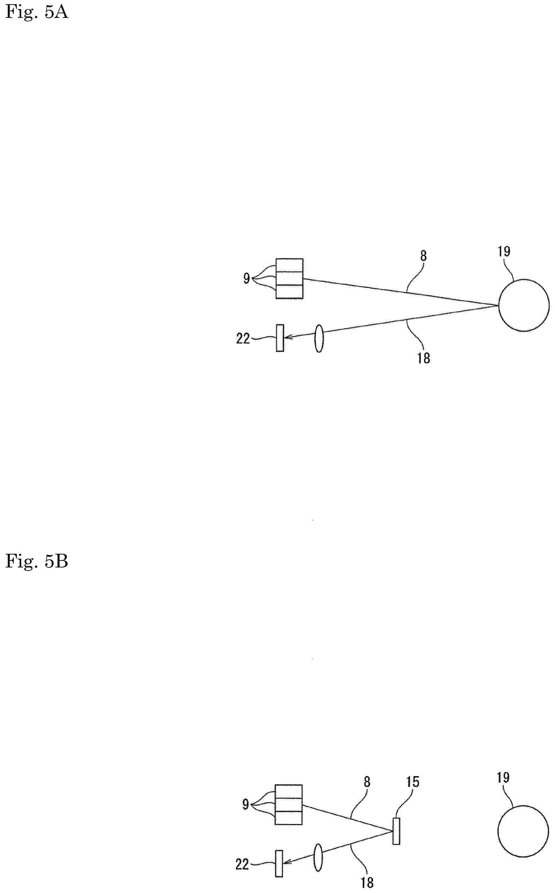

   Fig. 5A is a diagram illustrating a method of measuring a distance to a target using an OPT type light projection unit in a distance measurement device according to a modified example.
[Fig. 5B]
   Fig. 5B is a diagram illustrating a method of measuring a distance to a reflective object using the OPT type light projection unit in the distance measurement device according to the modified example.
[Fig. 6A]

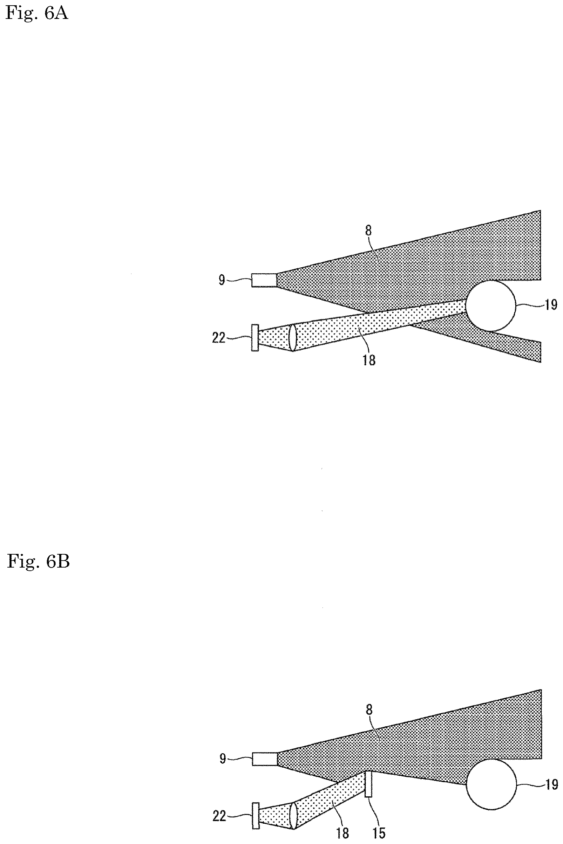

   Fig. 6A is a diagram illustrating a method of measuring a distance to a target using a flash type light projection unit in a distance measurement device according to a modified example.
[Fig. 6B]
   Fig. 6B is a diagram illustrating a method of measuring a distance to a reflective object using the flash type light projection unit in the distance measurement device according to the modified example.
[Fig. 7A]

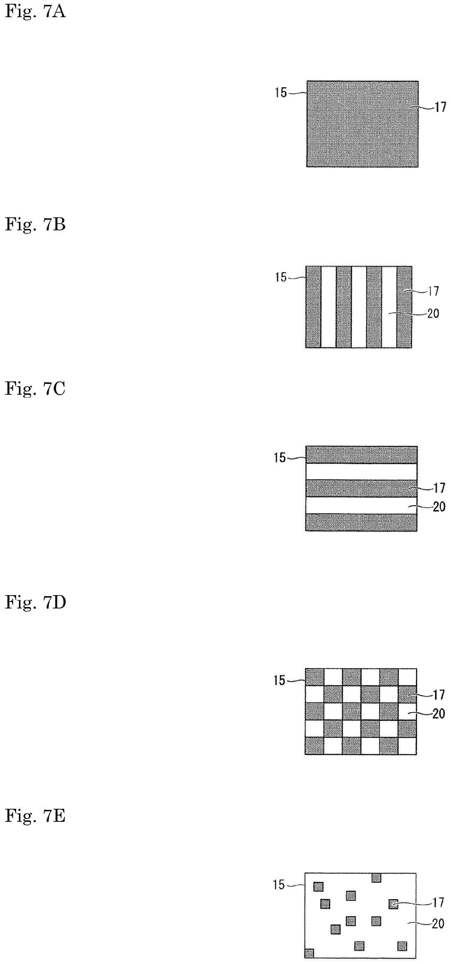

   Fig. 7A is a diagram illustrating a configuration of a shutter screen.
[Fig. 7B]
   Fig. 7B is a diagram illustrating a configuration of the shutter screen of a distance measurement device according to a modified example.
[Fig. 7C]
   Fig. 7C is a diagram illustrating a configuration of the shutter screen of the distance measurement device according to the modified example.
[Fig. 7D]
   Fig. 7D is a diagram illustrating a configuration of the shutter screen of the distance measurement device according to the modified example.
[Fig. 7E]
   Fig. 7E is a diagram illustrating a configuration of the shutter screen of the distance measurement device according to the modified example.
[Fig. 8]

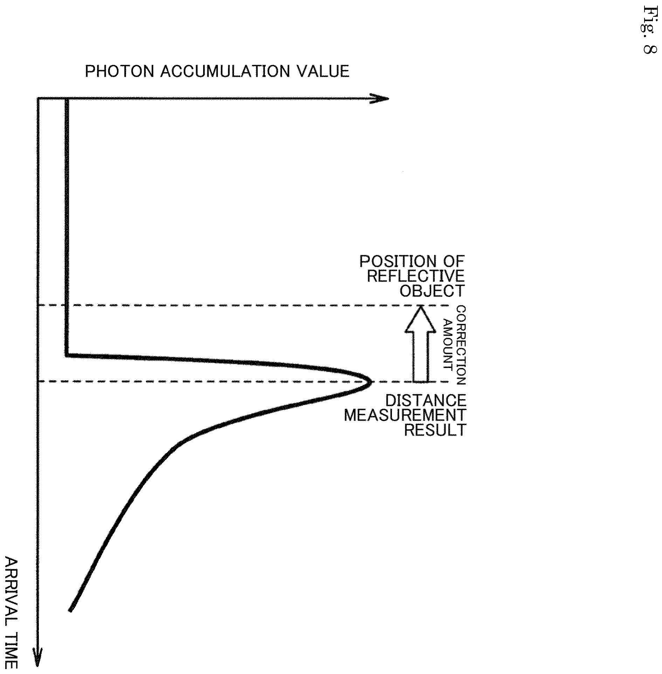

   Fig. 8 is a diagram illustrating a histogram generated in a histogram generator.
[Fig. 9]

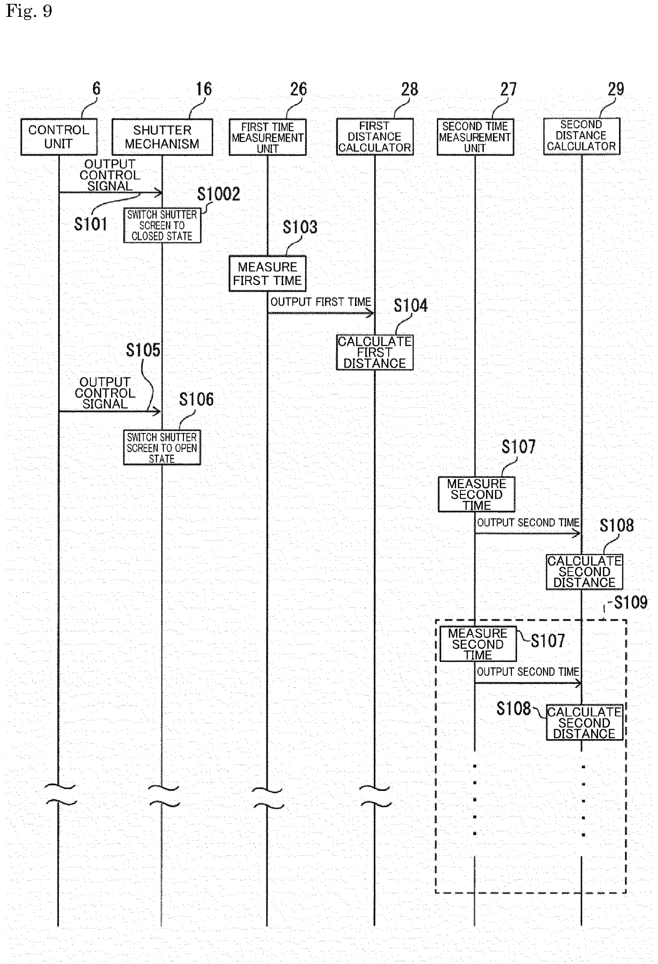

   Fig. 9 is a sequence diagram illustrating operations of the distance measurement device according to the first embodiment of the present disclosure.
[Fig. 10]

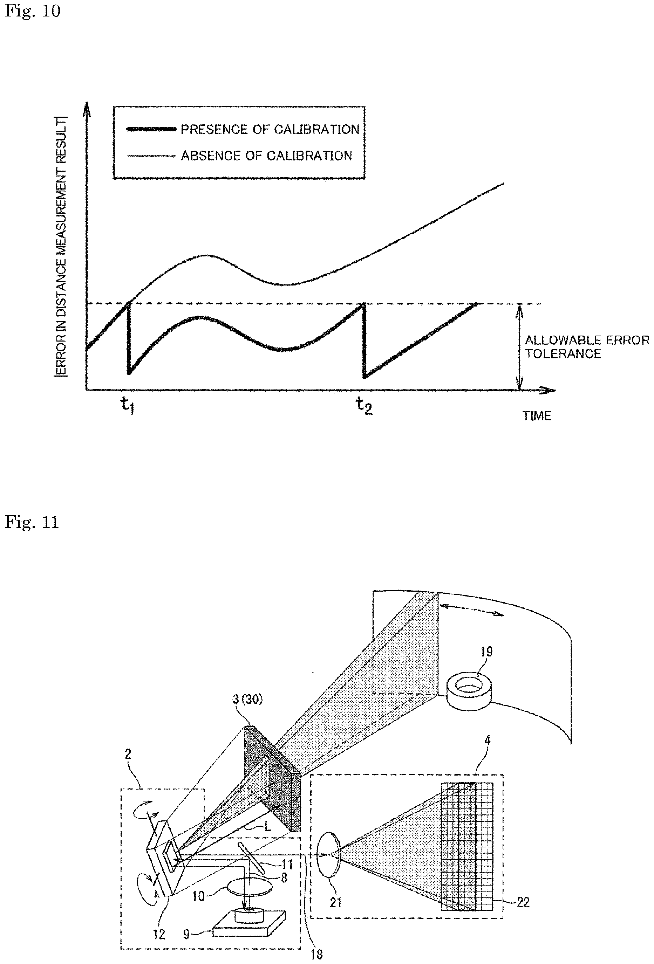

   Fig. 10 is a diagram illustrating effects of the distance measurement device according to the first embodiment of the present disclosure.
[Fig. 11]
   Fig. 11 is a diagram illustrating a configuration of a reflective object of a measurement distance device according to a modified example.
[Fig. 12]

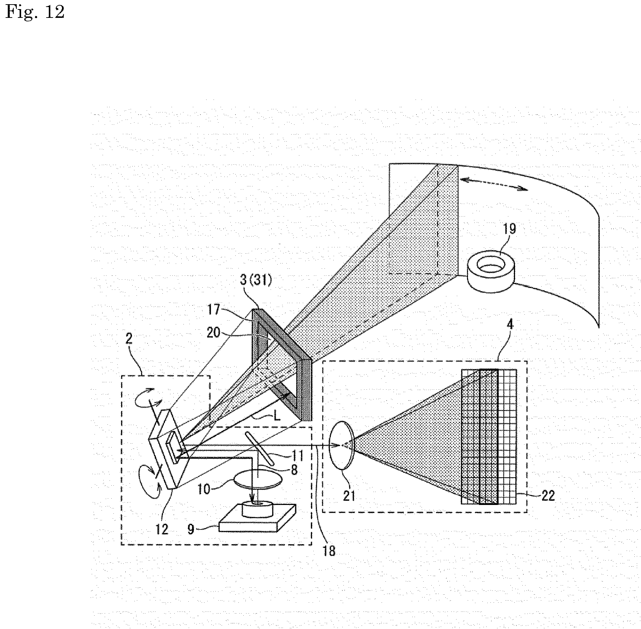

   Fig. 12 is a diagram illustrating a configuration of a light projection unit of a distance measurement device according to a second embodiment of the present disclosure.
[Fig. 13A]

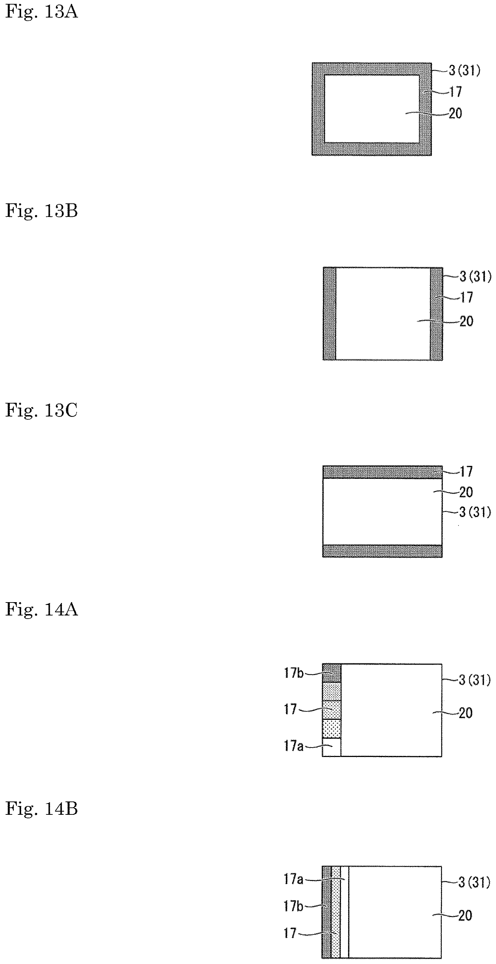

   Fig. 13A is a diagram illustrating a configuration of a fixed member.
[Fig. 13B]
   Fig. 13B is a diagram illustrating a configuration of the fixed member.
[Fig. 13C]
   Fig. 13C is a diagram illustrating a configuration of the fixed member.
[Fig. 14A]
   Fig. 14A is a diagram illustrating a configuration of a fixed member of a distance measurement device according to a modified example.
[Fig. 14B]
   Fig. 14B is a diagram illustrating a configuration of the fixed member of the distance measurement device according to the modified example.
[Fig. 15]

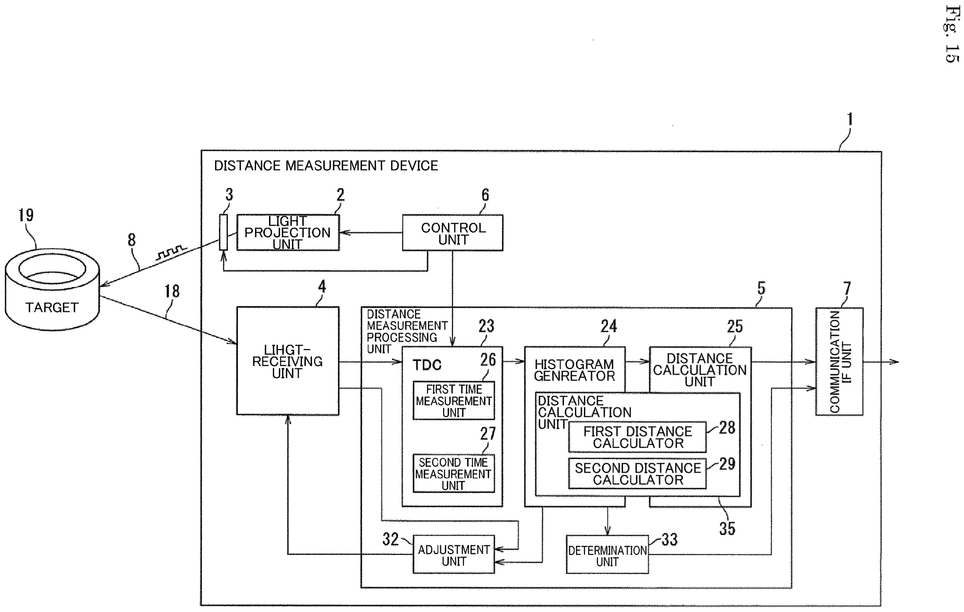

   Fig. 15 is a diagram illustrating an overall configuration of a distance measurement device according to a modified example.
[Fig. 16]

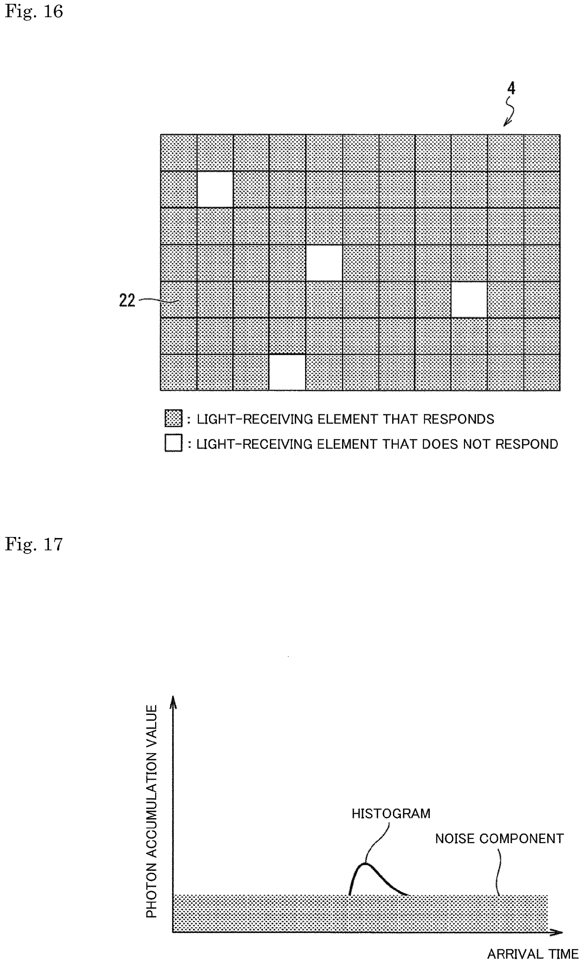

   Fig. 16 is a diagram illustrating an operation of an adjustment unit.
[Fig. 17]
   Fig. 17 is a diagram illustrating the operation of the adjustment unit.
[Fig. 18A]

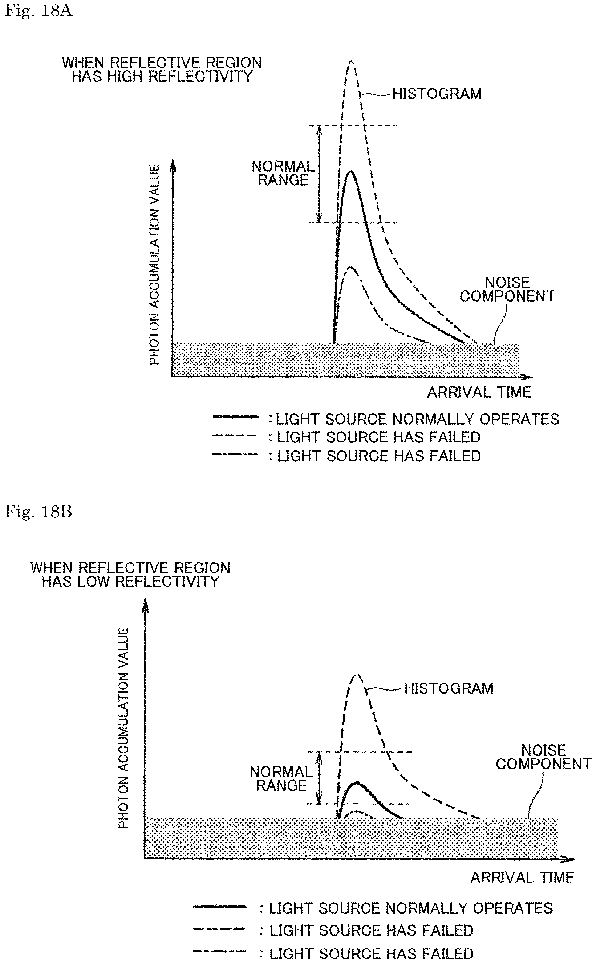

   Fig. 18A is a diagram illustrating an operation of a determination unit.
[Fig. 18B]
   Fig. 18B is a diagram illustrating the operation of the determination unit.
[Fig. 19]

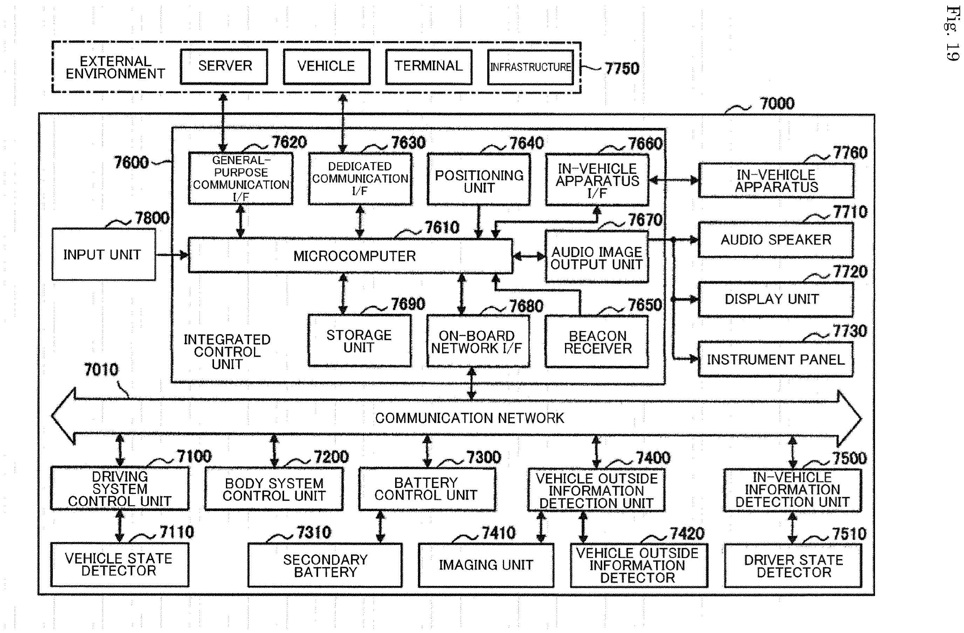

   Fig. 19 is a diagram illustrating an overall configuration of a moving body control system according to an application example.
[Fig. 20]

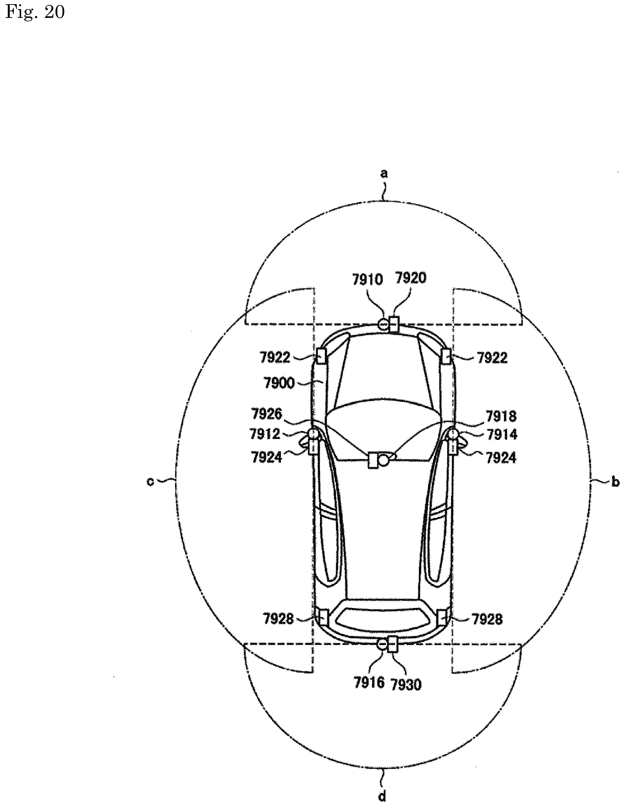

   Fig. 20 is a diagram illustrating installation positions of an imaging unit and a vehicle outside information detection unit.

### [Description of Embodiments]

The inventors discovered problems below in the conventional distance measurement device. In the conventional distance measurement device, even when calibration for distance measurement results is performed at the time of shipping, error in distance measurement results is likely to increase due to deterioration with time and temperature variation after shipping, circuit long time jitter, and the like. However, calibration for distance measurement results cannot be performed in real time.

Hereinafter, an example of a distance measurement device and a distance measurement method according to embodiments of the present disclosure will be described with reference to Fig. 1 to Fig. 20. Embodiments of the present disclosure will be described in the following order. Meanwhile, the present disclosure is not limited to the following examples. In addition, effects described in the specification are merely examples and are not limited, and other effects may be obtained.

1. First embodiment: distance measurement device
1-1 Overall configuration of distance measurement device
1-2 Operation of distance measurement device
1-3 Modified example
2. Second embodiment: distance measurement device
2-1 Configuration of principal parts
2-2 Modified example
3. Application example: moving body control system

### <1. First embodiment>

### [1-1 Overall configuration of distance measurement device]

Fig. 1 is a schematic configuration diagram illustrating an entire distance measurement device according to a first embodiment of the present disclosure. A distance measurement device 1 of Fig. 1 is a ToF distance measurement sensor. As illustrated in Fig. 1, the distance measurement device 1 of the first embodiment includes components such as a light projection unit 2, a reflective object 3, a light-receiving unit 4, a distance measurement processing unit 5, and a control unit 6. These components may be integrally configured as a system on chip (SoC) such as a complementary MOS (CMOS) or a large scale integration (LSI) circuit, for example, or some components such as the light projection unit 2 and the light-receiving unit 4 may be configured as a separate LSI circuit. The distance measurement device 1 operates according to an operation clock signal that is not illustrated. The distance measurement device 1 further includes a communication interface (IF) unit 7 for outputting distance measurement data according to a distance calculated in the distance measurement processing unit 5 to the outside. Although not illustrated, the distance measurement device 1 is configured such that it can communicate with an external host IC through the communication IF unit 7.

As illustrated in Fig. 2, the light projection unit 2 includes a light source 9 emitting light 8 for ToF distance measurement. As the light 8, for example, laser light can be used. The light source 9 may be, for example, an edge emitting type semiconductor laser or a surface emitting type semiconductor laser. The light source 9 is driven by a trigger pulse from the control unit 6. The trigger pulse is a pulse-shaped signal having a predetermined frequency. In addition, the light projection unit 2 includes a scanning mechanism for raster scanning of the light 8. In Fig. 2, a mirror scan type scanning mechanism including an emitter lens 10, a light projection mirror 11, and a micro-mirror 12 is exemplified as the scanning mechanism. The micro-mirror 12 changes a direction of a reflective surface according to a control signal from the control unit 6. Then, the light 8 (laser light) emitted from the light source 9 is projected in a direction in response to the direction of the reflective surface of the micro-mirror 12 through the emitter lens 10, the light projection mirror 11, and the micro-mirror 12.

Meanwhile, although an example in which the mirror scan type scanning mechanism is used as a scanning mechanism is illustrated in the present embodiment, other configurations may be employed. For example, a polygon mirror type scanning mechanism using a polygon mirror 13, as illustrated in Fig. 3A and Fig. 3B, or a micro electro mechanical systems (MEMS) mirror type scanning mechanism using a MEMS mirror 14, as illustrated in Fig. 4A and Fig. 4B, may be employed. In addition, an optical phased array (OPT) type scanning mechanism of raster-scanning the light 8 using a plurality of light sources 9, as illustrated in Fig. 5A and Fig. 5B, may be employed. Further, a flash type mechanism of radiating the light 8 in a wide range using an LED as a light source 9, as illustrated in Fig. 6A and Fig. 6B, may be employed.

The reflective object 3 is disposed at a position of a predetermined distance L along a path of the light 8 from the light source 9 and constitutes a shutter mechanism 16 capable of opening/closing a shutter screen 15, as illustrated in Fig. 2. The size of the shutter screen 15 is set to a size by which all paths of the light 8 which can be taken at the time of raster scanning can be shielded. The entire area of the shutter screen 15 on the side of the light source 9, that is, the entire area on the side of the micro-mirror 12 is a reflective region 17 reflecting the light 8, as illustrated in Fig. 7A. As the shutter mechanism 16, for example, a mechanism such as a mechanical shutter mounted in a digital camera can be employed. The shutter mechanism 16 drives the shutter screen 15 between an open state and a closed state according to a control signal from the control unit 6. When the shutter screen 15 switches to a closed state, the light 8 from the micro-mirror 12 is reflected by the reflective region 17 of the shutter screen 15, and the reflected light 8 (hereinafter referred to as "reflective light 18") is incident on the light-receiving unit 4 via the micro-mirror 12 and the light projection mirror 11. In addition, when the shutter screen 15 switches to an open state, the light 8 from the light source 9 is reflected by a target 19 present farther away than the shutter mechanism 16 instead of the reflective region 17 of the shutter screen 15, and the reflective light 18 is incident on the light-receiving unit 4 via the micro-mirror 12 and the light projection mirror 11. When the distance measurement device 1 is mounted in a vehicle, for example, a preceding vehicle or a following vehicle, a structure (e.g., a curb) on a road, or another vehicle present around the host vehicle may be conceived as the target 19.

Meanwhile, although an example in which a screen of which an entire area on the side of the light source 9 is the reflective region 17 is used as the shutter screen 15 is described in the present embodiment, other configurations may also be employed. For example, as illustrated in Fig. 7B and Fig. 7C, a screen on which a plurality of elongated passing regions 20 through which the light 8 passes and a plurality of elongated reflective regions 17 are arranged in a stripe pattern may be employed. The passing regions 20 may be regions formed of a transparent material or regions having openings, for example. In addition, a screen on which a plurality of passing regions 20 through which the light 8 passes and a plurality of reflective regions 17 are arranged in a checkered pattern, as illustrated in Fig. 7D, or a screen on which a plurality of passing regions 20 through which the light 8 passes and a plurality of reflective regions 17 are randomly arranged, as illustrated in Fig. 7E, may be employed. Accordingly, when the shutter screen 15 is in a closed state, the light 8 can also be projected to the target 19 through the passing regions 20, and thus the reflective light 18 from the target 19 can be obtained and a distance from the light source 9 to the target 19 can be measured. Furthermore, the micro-mirror 12 and the reflective object 3 are integrally formed such that a relative positional relation therebetween does not change. Fig. 2 illustrates a configuration in which the corners of the micro-mirror 12 and the corners of the reflective object 3 (shutter mechanism 16) are bonded through a bar-shaped frame member.

The light-receiving unit 4 includes a receiver lens 21 and a plurality of light-receiving elements 22, as illustrated in Fig. 2. The plurality of light-receiving elements 22 are arranged in a two-dimensional array form. As the light-receiving elements 22, a single photon avalanche diode (SPAD) that outputs an electrical signal in response to received light is used. In addition, the light-receiving unit 4 focuses the reflective light 18 incident through the micro-mirror 12 and the light projection mirror 11 using the receiver lens 21 and causes the light-receiving elements 22 in a scan direction of the light 8 to receive the focused reflective light 18. Electrical signals from the light-receiving elements 22 are output to the distance measurement processing unit 5. Meanwhile, although an example in which the light-receiving unit 4 includes a plurality of light-receiving elements 22 is exemplified in the present embodiment, other configurations can also be employed. For example, one light-receiving element 22 may be used.
In addition, although an example in which a SPAD is used as the light-receiving elements 22 is exemplified in the present embodiment, other configurations can also be employed. For example, a photodiode (PD) or an avalanche PD (APD) may be used.

The distance measurement processing unit 5 is a component that calculates a distance to the target 19 on the basis of a timing at which the light source 9 emits the light 8 and a timing at which the light-receiving unit 4 receives the reflective light 18. For example, the distance measurement processing unit 5 may be configured as a signal processing processor. The distance measurement processing unit 5 includes a time-to-digital converter (TDC) 23, a histogram generator 24, and a distance calculation unit 25.
The TDC 23 is a component that converts a time (hereinafter referred to as "arrival time") from when the light 8 is emitted from the light source 9 to when the reflective light 18 is received by the light-receiving elements 22 into a digital value on the basis of a trigger pulse from the control unit 6 (trigger pulse for driving the light source 9) and an electric pulse signal from the light-receiving unit 4. As a digital value, for example, a numerical value in the range of 0 to 255 can be used. The obtained digital value is output to the histogram generator 24. More specifically, the TDC 23 includes a first time measurement unit 26 and a second time measurement unit 27. The first time measurement unit 26 measures an arrival time (hereinafter referred to as "first time") from when the light 8 (hereinafter referred to as "first light 8") is emitted from the light source 9 to when the reflective light 18 from the shutter screen 15 (reflective region 17) is received by the light-receiving elements 22 and outputs a digital value (numerical value in the range of 0 to 255) in response to the measured first time. In addition, the second time measurement unit 27 measures an arrival time (hereinafter referred to as "second time") from when the light 8 (hereinafter referred to as "second light") is emitted from the light source 9 to when the reflective light 18 from the target 19 is received by the light-receiving elements 22 and outputs a digital value (numerical value in the range of 0 to 255) in response to the measured second time.

The histogram generator 24 is a component that accumulates digital values (bin) of arrival times converted by the TDC 23 to generate a histogram as illustrated in Fig. 8. A histogram is stored as a certain type of data structure or table on a storage device 34 of the distance measurement processing unit 5. The storage device 34 also stores a predetermined distance L between the light source 9 and the reflective object 3 at the time of shipping. The histogram is generated for each light-receiving element 22. That is, as many histograms as the number of light-receiving elements 22 are generated. The histogram generator 24 increases a corresponding bin value whenever a digital value output from the TDC 23 is received to update histograms. Histograms and the predetermined distance L in the storage device 34 are referred to in the distance calculation unit 25.

The distance calculation unit 25 is a component that detects a peak value (digital value) in a histogram with reference to each histogram generated by the histogram generator 24 and the predetermined distance L and calculates a distance to the target 19 from an arrival time corresponding to the detected peak value (digital value). That is, if the reflective light 18 obtained when the projected light 8 is reflected by the target 19 is received, an arrival time is a turnaround time to the target 19, and thus a distance to the target 19 can be calculated for each light-receiving element 22 by multiplying the arrival time by c/2 (c is the velocity of light). In addition, the distance calculation unit 25 corrects the calculated distance on the basis of the first time and the predetermined distance L. Then, a distance image can be obtained according to a distance corrected with respect to each of the plurality of light-receiving elements 22. Data according to the distance image is output to the communication IF unit 7.

More specifically, the histogram generator 24 and the distance calculation unit 25 constitute a distance calculation unit 35 including a first distance calculator 28 and a second distance calculator 29. The first distance calculator 28 calculates a distance (hereinafter referred to as a "first distance") from the light source 9 to the shutter screen 15 along the path of the first light 8 on the basis of the first time measured by the first time measurement unit 26. As the first distance, for example, an average value of distances from the light source 9 to a plurality of points on the shutter screen 15, a shortest distance among distances from the light source 9 to a plurality of points on the shutter screen 15, or a distance from the light source 9 to a representative position (e.g., a predetermined point) on the shutter screen 15 may be conceived. In addition, the second distance calculator 29 calculates a distance (hereinafter referred to as a "second distance") from the light source 9 to the target 19 along the path of the second light 8 on the basis of the predetermined distance L stored in the storage device 34, the first distance calculated by the first distance calculator 28, and the second time measured by the second time measurement unit 27. As a method of calculating the second distance, for example, a method of subtracting the first distance from the predetermined distance L and adding a subtraction result to a calculation result of "second time × c/2" to obtain the second distance or a method of dividing the predetermined distance L by the first distance and multiplying a calculation result of "second time × c/2" by a division result to obtain the second distance may be conceived.

The control unit 6 is a component that integrally controls operations of the distance measurement device 1. The control unit 6 may be configured as a microprocessor, for example. The control unit 6 outputs a trigger pulse for causing the light 8 to be projected to the light source 9 and the TDC 23 whenever a predetermined light emission period elapses. In addition, the control unit 6 outputs a control signal for switching the shutter screen 15 to a closed state to the shutter mechanism 16 every timing of executing calibration for a distance measurement result. As a calibration execution timing, (1) when a system starts, (2) when it is determined that there is no obstacle closely (e.g., within 50 m) in a movement direction in previous scanning, (3) when a calibration execution command is issued by a user or the system side, or (4) a combination thereof may be conceived in a case where the distance measurement device 1 is mounted in an object (a vehicle or the like) moving at a high speed. On the other hand, when the distance measurement device 1 is mounted in an object (e.g., a mobile terminal) that does not move at a high speed, (1) when the system starts, (2) when a calibration execution command is issued by a user or system side, or (3) a combination thereof may be conceived. In addition, the control unit 6 outputs a control signal for switching the shutter screen 15 to an open state to the shutter mechanism 16 when the first distance calculator 28 calculates the first distance after the shutter screen 15 has switched to the closed state.

The communication IF unit 7 is an interface circuit for outputting distance measurement data calculated by the distance calculation unit 25 to an external host IC. For example, the communication IF unit 7 may be an interface circuit based on a mobile industry processor interface (MIPI), a serial peripheral interface (SPI), an inter-integrated circuit (I2C), or an integrated circuit of some of these interface circuits.

### [1-2. Operation of distance measurement device]

Next, the operation (distance measurement method) of the distance measurement device 1 according to the first embodiment of the present disclosure will be described. Fig. 9 is a sequence diagram illustrating the operation of the distance measurement device according to the first embodiment.

First, it is assumed that, when the light source 9 emits light and ToF distance measurement is executed, a calibration execution command is issued by the system and the control unit 6 outputs the control signal for switching the shutter screen 15 to the closed state to the shutter mechanism 16, as illustrated in Fig. 9 (step S101). Then, the shutter mechanism 16 switches the shutter screen 15 to the closed state according to the control signal from the control unit 6 (step S102). Accordingly, the light 8 (first light 8) from the light source 9 is reflected by the reflective region 17 of the shutter screen 15, and the reflected first light 8 (reflective light 18) is incident on the light-receiving unit 4 through the micro-mirror 12 and the light projection mirror 11.

Subsequently, the first time measurement unit 26 measures an arrival time (first time) from when the first light 8 is emitted from the light source 9 to when the reflective light 18 from the reflective region 17 of the shutter screen 15 is received by the light-receiving elements 22 (step S103). Subsequently, the first distance calculator 28 calculates a distance (first distance) from the light source 9 to the shutter screen 15 along the path of the first light 8 on the basis of the measured first time (step S104). Accordingly, the first distance that is a distance measurement result when the predetermined distance L that is a known distance has been measured through ToF distance measurement is obtained.

When the first distance is calculated, the control unit 6 outputs the control signal for switching the shutter screen 15 to the open state (step S105). Then, the shutter mechanism 16 switches the shutter screen 15 to the open state according to the control signal (step S106). Accordingly, the light 8 (second light 8) from the light source 9 is not reflected by the reflective region 17 of the shutter screen 15 but the second light 8 is reflected by the target 19 present farther than the shutter mechanism 16, the reflected second light 8 (reflective light 18) is incident on the light-receiving unit 4 through the micro-mirror 12 and the light projection mirror 11.

Subsequently, the second time measurement unit 27 measures an arrival time (second time) from when the second light 8 is emitted from the light source 9 to when the reflective light 18 from the target 19 is received by a light-receiving element 22 (step S107). Subsequently, the second distance calculator 29 calculates a distance (second distance) from the light source 9 to the target 19 along the path of the second light 8 on the basis of the measured second time and first distance, and the predetermined distance L that is a known distance (step S108). Accordingly, calibration for the calculation result of the second distance according to the second time, that is, the result of measurement of the distance from the light source 9 to the target 19, is performed using a difference between the predetermined distance L and the first distance.

Thereafter, the flow of steps S107 and S108 is repeated to measure a new second time, and a second distance is successively calculated on the basis of the measured second time, the first distance acquired in step S104, and the predetermined distance L (step S109). Accordingly, a second distance calibrated using the first distance and the predetermined distance L is obtained.

Then, a distance image of the target 19 is obtained by repeating the flow of steps S101 to S111 for all the light-receiving elements 22 by operating the scanning mechanism, or the like.

As described above, the distance measurement device 1 of the first embodiment includes the reflective object 3 disposed at a position of the predetermined distance L along the path of the light 8 from the light source 9. In addition, first, the first time measurement unit 26 measures the first time from when the first light 8 is emitted from the light source 9 to when the reflective light 18 from the reflective object 3 is received by the light-receiving elements 22. Thereafter, the second time measurement unit 27 measures the second time from when the second light 8 is emitted from the light source 9 to when the reflective light 18 from the target 19 is received by the light-receiving elements 22. Subsequently, the distance calculation unit 35 calculates the distance (second distance) from the light source 9 to the target 19 along the path of the second light 8 on the basis of the predetermined distance L, the first time, and the second time. Therefore, when error in a measurement result increases due to deterioration with time, temperature variation, circuit long time jitter, or the like, as shown at times t₁ and t₂ of Fig. 10, for example, the accuracy of the measurement result can be improved because calibration for the measurement result can be performed and error in the measurement result can be reduced.

Meanwhile, after shipping of the distance measurement device 1, the predetermined distance L is likely to change due to occurrence of physical position shift in the light source 9 and the reflective object 3. However, since error in a measurement result due to deterioration with time, temperature variation, circuit long time jitter, or the like is approximately several centimeters, whereas increment of the error in the measurement result due to physical position shift is approximately several micrometers, this does not become a problem because the increment is sufficiently small.

In addition, in the distance measurement device 1 of the first embodiment, the distance calculation unit 35 includes the first distance calculator 28 that calculates the first distance from the light source 9 to the reflective object 3 along the path of the first light 8 on the basis of the first time and the second distance calculator 29 that calculates the distance from the light source 9 to the target 19 along the path of the second light 8 on the basis of the predetermined distance L, the first distance, and the second time. Therefore, the distance from the light source 9 to the target 19 can be calculated more appropriately.

In addition, in the distance measurement device 1 of the first embodiment, the reflective object 3 is disposed on the path of the light 8 emitted from the light source 9 and includes the shutter mechanism 16 for opening/closing the shutter screen 15. Therefore, the shutter screen 15 can be disposed on the path of the light 8 when calibration is required.

Furthermore, in the distance measurement device 1 of the first embodiment, a screen of which entire area on the side of the light source 9 is the reflective region 17 that reflects the first light 8, a screen on which passing regions 20 through which the second light 8 passes and reflective regions 17 are arranged in a stripe pattern, a screen on which passing regions 20 and reflective regions 17 are arranged in a checkered pattern, or a screen on which passing regions 20 and reflective regions 17 are randomly arranged is employed as the shutter screen 15. Therefore, even when the shutter screen 15 is in the closed state, the light 8 can be projected to the target 19 through the passing regions 20, and thus the reflective light 18 from the target 19 can be obtained to measure the distance to the target 19.

In addition, in the distance measurement device 1 of the first embodiment, the first distance calculator 28 uses an average value of distances from the light source 9 to a plurality of points on the reflective object 3, a shortest distance among distances from the light source 9 to a plurality of points on reflective object 3, or a distance from the light source 9 to a representative position on the reflective object 3 as the first distance. Therefore, the first distance can be easily calculated and thus the second distance can be easily calculated on the basis of the first distance.

Furthermore, in the distance measurement device 1 of the first embodiment, the micro-mirror 12 and the reflective object 3 are integrally formed. Therefore, change in the distance between the micro-mirror 12 and the reflective object 3 can be curbed and thus change in the predetermined distance L between the light source 9 and the reflective object 3 can be curbed.

### [1-3. Modified example]

Meanwhile, although an example in which the shutter mechanism 16 for opening/closing the shutter screen 15 is used as the reflective object 3 is illustrated in the distance measurement device 1 according to the first embodiment, other configurations can be employed. For example, as illustrated in Fig. 11, a transmission type liquid crystal panel 30 disposed on the path of the light 8 emitted from the light source 9 may be used. When the transmission type liquid crystal panel 30 is used, the reflective regions 17 and the passing regions 20 can be realized by forming only pixels corresponding to the reflective regions 17 as opaque or transparent pixels and a driving part of the shutter screen 15 can be omitted, and thus improvement of durability and reduction of manufacturing costs can be promoted. In addition, calibration for a distance measurement result can be executed more frequently than in a case of using the shutter mechanism 16.

### <2. Second embodiment: distance measurement device>

### [2-1 Configuration of principal parts]

Next, a distance measurement device 1 according to a second embodiment of the present disclosure will be described. The overall configuration of the distance measurement device 1 of the second embodiment is the same as that of Fig. 1 and thus illustration thereof is omitted. Fig. 12 is a conceptual diagram of principal parts of the distance measurement device 1 of the present embodiment. In Fig. 12, parts corresponding to those in Fig. 2 are denoted by the same signs and redundant description is omitted.

The distance measurement device 1 of the second embodiment differs from the first embodiment with respect to the configuration of the reflective object 3. In the second embodiment, as illustrated in Fig. 12, a fixed member 31 having a reflective region 17 reflecting the first light 8 along the circumferential part of at least a part thereof and having a passing region 20 passing the second light 8 in other parts thereof is provided as the reflective object 3. The fixed member 31 may have the reflective region 17 along the all circumferential part, as illustrated in Fig. 13A, may have the reflective region 17 along left and right circumferential parts, as illustrated in Fig. 13B, or may have the reflective region 17 along upper and lower circumferential parts, as illustrated in Fig. 13C.

In addition, the control unit 6 outputs a control signal for changing the angle of the micro-mirror 12 such that the first light 8 is projected to the reflective region 17 to a driving mechanism (not shown) of the micro-mirror 12 at a distance measurement calibration execution timing. As a calibration execution timing, (1) when the system starts, (2) at the time of every scanning, (3) once for several scanning operations, (4) when a user or the system issues a calibration execution command, or (5) a combination thereof may be conceived. Among these, according to the timing of (3), a distance to the fixed member 31 can be measured at the edge of the view all the time, and thus power consumption can be slightly reduced by not measuring and evaluating the distance. In addition, according to the timing of (4), power consumption can be further reduced than in case of execution at the timing of (2).

As described above, in the distance measurement device 1 of the second embodiment, the fixed member 31 having the reflective region 17 for reflecting the first light 8, provided along a circumferential part of at least a part thereof, and having the passing region 20 for passing the second light 8 in other parts thereof is used as the reflective object 3. Therefore, the light 8 may be projected to the passing region 20 when the distance to the target 19 is measured and the light 8 may be projected to the reflective region 17 when calibration is executed, and thus the driving part of the shutter screen 15 can be omitted differently from the method of using the shutter mechanism 16 and improvement of durability and reduction of manufacturing costs can be promoted. In addition, calibration for a distance measurement result can be executed more frequently than in a case of using the shutter mechanism 16.

### [2-2 Modified example]

Meanwhile, although an example in which a region having a constant reflectivity is used as the reflective region 17 in the distance measurement device 1 according to the second embodiment, other configurations can also be employed. For example, a region having a plurality of parts having different reflectivities, that is, a high-reflectivity region 17a having a reflectivity equal to or greater than a predetermined value and a low-reflectivity region 17b having a reflectivity less than the predetermined value may be used. As a region having the high-reflectivity region 17a and the low-reflectivity region 17b, a region having gradation of shades along a longer side direction of the circumferential part, as illustrated in Fig. 14A, or a region having gradation of shades along a shorter side direction of the circumferential part, as illustrated in Fig. 14B, may be used. Further, color gradation instead of shades may be used.

In addition, in a case where the reflective region 17 having a plurality of parts having different reflectivities is used, the distance measurement processing unit 5 may further include an adjustment unit 32 and a determination unit 33, as illustrated in Fig. 15. The adjustment unit 32 is a component that adjusts detection efficiency of the light-receiving elements 22 on the basis of an electrical signal from the light-receiving unit 4 and a histogram generated by the histogram generator 24. Adjustment of the detection efficiency of the light-receiving elements 22 is performed such that at least one of the plurality of light-receiving elements 22 does not respond to the light 8 reflected by the high-reflectivity region 17a, as illustrated in Fig. 16. In a state in which the light-receiving element 22 does not respond, an electrical signal is not output from the light-receiving element 22. In addition, as illustrated in Fig. 17, a peak value is caused to appear in each of a plurality of histograms generated by the TDC 23 and the histogram generator 24 for each of the plurality of light-receiving elements 22 on the basis of the light 8 reflected by the low-reflectivity region 17b. Accordingly, it is possible to prevent all the light-receiving elements 22 from responding to light even when the reflective light 18 is not present when an ambient light is intensive, such as at midsummer, and determine a distance to the target 19 more appropriately. In addition, when a distance to each part of the target 19 having a low reflectivity is measured, it is possible to prevent a peak of a histogram from being buried in noise for each light-receiving element 22 corresponding to each part and determine roughness and the like of the surface of the target 19 more appropriately.

The determination unit 33 is a component that determines a failure of the distance measurement device 1 on the basis of histograms generated by the histogram generator 24. In determination of a failure of the distance measurement device 1, it is determined whether a peak value of a histogram generated by the TDC 23 and the histogram generator 24 on the basis of the light 8 reflected by the reflective region 17 is within a predetermined normal range for each reflectivity of the reflective region 17, as illustrated in Fig. 18A and Fig. 18B. Then, it is determined that the light source 9 normally operates when it is determined that the peak value is within the normal range and it is determined that the light source 9 has failed when it is determined that the peak value is beyond the normal range. Accordingly, when a peak value of a histogram is greater than an upper limit value of the normal range, it is possible to immediately stop use of the distance measurement device 1 after outputting failure warning for eye protection to the communication IF unit 7 because the energy of the light 8 emitted from the light source 9 is excessively high. In addition, when a peak value of a histogram is less than a lower limit value of the normal range, it is possible to output failure warning to the communication IF unit 7 because the energy of the light 8 emitted from the light source 9 is excessively low.

### <3. Application example>

The technology according to the present disclosure can be applied to various products. For example, the technology according to the present disclosure may be realized as a device mounted in any type of moving body, such as a vehicle, an electric vehicle, a hybrid electric vehicle, an automatic two-wheeled vehicle, a bicycle, personal mobility, an airplane, a drone, a ship, a robot, construction equipment, and an agricultural machine (tractor).

Fig. 19 is a block diagram illustrating a schematic configuration example of a vehicle control system 7000 which is an example of a moving body control system to which the technology according to the present disclosure is applicable. The vehicle control system 7000 includes a plurality of electronic control units connected through a communication network 7010. In the example illustrated in Fig. 19, the vehicle control system 7000 includes a driving system control unit 7100, a body system control unit 7200, a battery control unit 7300, a vehicle outside information detection unit 7400, an in-vehicle information detection unit 7500, and an integrated control unit 7600. The communication network 7010 that connects these control units may be an on-board communication network based on an arbitrary standard such as a controller area network (CAN), a local interconnect network (LIN), a local area network (LAN), or a FlexRay (registered trademark), for example.

Each control unit includes a microcomputer that performs arithmetic operation processing according to various programs, a storage unit that stores programs executed by the microcomputer, parameters used for various arithmetic operations, or the like, and a driving circuit that drives various control target devices. Each control unit includes a network I/F for performing communication with other control units through the communication network 7010 and a communication I/F for performing communication with devices or sensors inside/outside a vehicle, and the like according to wired communication or wireless communication. In Fig. 19, a microcomputer 7610, a general-purpose communication I/F 7620, a dedicated communication I/F 7630, a positioning unit 7640, a beacon receiver 7650, an in-vehicle apparatus I/F 7660, an audio image output unit 7670, an on-board network I/F 7680, and a storage unit 7690 are illustrated as functional components of the integrated control unit 7600. Likewise, other control units also include a microcomputer, a communication I/F, a storage unit, and the like.

The driving system control unit 7100 controls operations of devices related to a driving system of the vehicle according to various programs. For example, the driving system control unit 7100 serves as a control device of a driving power generation device for generating driving power of the vehicle, such as an internal combustion engine or a driving motor, a driving power transfer mechanism for transferring the driving power to the vehicle, a steering mechanism for adjusting a steering angle of the vehicle, a brake device for generating a braking power of the vehicle, and the like. The driving system control unit 7100 may have a function as a control device such as an autilock brake system (ABS) or electronic stability control (ESC).

A vehicle state detector 7110 is connected to the driving system control unit 7100. The vehicle state detector 7110 may include, for example, a gyro sensor that detects an angular velocity of axial rotation motion of the vehicle body, an acceleration sensor that detects an acceleration of the vehicle, or at least one of sensors for detecting an operation amount of an accelerator pedal, an operation amount of a brake pedal, an operation amount of a steering wheel, an engine speed, a rotating speed of the vehicle wheels, and the like. The driving system control unit 7100 performs arithmetic operation processing using a signal input from the vehicle state detector 7110 and controls an internal combustion engine, a driving motor, an electric power steering device, a brake device, or the like.

The body system control unit 7200 controls operations of various devices provided in the vehicle body according to various programs. For example, the body system control unit 7200 may serve as a control device of a keyless entry system, a smart key system, a power window device, or various lamps such as a head lamp, a back lamp, a brake lamp, a winker, and a fog lamp. In this case, radio waves transmitted from a portable machine substituting for a key or signals of various switches can be input to the body system control unit 7200. The body system control unit 7200 receives input of these radio waves or signals and controls a door lock device, a power window device, lamps, and the like of the vehicle.

The battery control unit 7300 controls a secondary battery 7310 that is a power supply source of the driving motor according to various programs. For example, information such as a battery temperature, a battery output voltage or remaining battery capacity is input to the battery control unit 7300 from a battery device including the secondary battery 7310. The battery control unit 7300 performs arithmetic operations using such a signal and performs temperature adjustment control of the secondary battery 7310 or control of a cooling device or the like included in the battery device.

The vehicle outside information detection unit 7400 detects information on the outside of the vehicle equipped with the vehicle control system 7000. For example, at least one of an imaging unit 7410 and a vehicle outside information detector 7420 may be connected to the vehicle outside information detection unit 7400. The imaging unit 7410 includes at least one of a time of flight (ToF) camera, a stereo camera, a monocular camera, an infrared camera, and other cameras. The vehicle outside information detector 7420 may include, for example, at least one of an environment sensor for detecting the current weather or weather condition and a surrounding information detection sensor for detecting other vehicles, obstacles, pedestrians, or the like around the vehicle equipped with the vehicle control system 7000.

The environment sensor may include, for example, at least one of a raindrop sensor that detects rainy weather, a fog sensor that detects fog, a sunshine sensor that detects a degree of sunshine, and a snow sensor that detects snowfall. The surrounding information detection sensor may be at least one of an ultrasonic sensor, a radar device, and a light detection and ranging laser imaging detection and ranging (LIDAR) device. The imaging unit 7410 and the vehicle outside information detector 7420 may be included as independent sensors or devices or included as a device in which a plurality of sensors or devices are integrated.

Here, Fig. 20 illustrates an example of installation positions of the imaging unit 7410 and the vehicle outside information detector 7420. For example, imaging units 7910, 7912, 7914, 7916, and 7918 may be provided at at least one or more positions of the front nose, the side-view mirrors, the rear bumper, the back door, and an upper part of the front glass in the vehicle cabin of a vehicle 7900. The imaging unit 7910 provided at the front nose and the imaging unit 7918 provided at the upper part of the front glass in the vehicle cabin mainly acquire a front view image of the vehicle 7900. The imaging units 7912 and 7914 provided at the side-view mirrors mainly acquire side view images of the vehicle 7900. The imaging unit 7916 provided at the rear bumper or the back door mainly acquires a rear view image of the vehicle 7900. The imaging unit 7918 provided at the upper part of the front glass in the vehicle cabin is mainly used to detect preceding vehicles, pedestrians, obstacles, signals, traffic signs, lanes, or the like.

Meanwhile, Fig. 20 illustrates an example of imaging ranges of the imaging units 7910, 7912, 7914, and 7916. An imaging range a represents an imaging range of the imaging unit 7910 provided at the front nose, imaging ranges b and c represent imaging ranges of the imaging units 7912 and 7914 provided at the side-view mirrors, and an imaging range d represents an imaging range of the imaging unit 7916 provided at the rear bumper or the back door. For example, image data captured by the imaging units 7910, 7912, 7914, and 7916 may be superposed to obtain a bird's eye view image of the vehicle 7900.

Vehicle outside information detectors 7920, 7922, 7924, 7926, 7928, and 7930 provided at the front, rear, sides, corners, and the upper part of the front glass in the vehicle cabin of the vehicle 7900 may be, for example, ultrasonic sensors or radar devices. The outside information detectors 7920, 7926, and 7930 provided at the front nose, the rear bumper, the back door, and the upper part of the front glass in the vehicle cabin of the vehicle 7900 may be, for example, LIDAR devices. These vehicle outside information detectors 7920 to 7930 are mainly used to detect preceding vehicles, pedestrians, obstacles, or the like.

Description will continue with reference to Fig. 19. The vehicle outside information detection unit 7400 causes the imaging unit 7410 to capture an image outside the vehicle and receives captured image data. In addition, the vehicle outside information detection unit 7400 receives detected information from the vehicle outside information detector 7420 connected thereto. When the vehicle outside information detector 7420 is an ultrasonic sensor, a radar device, or a LIDAR device, the vehicle outside information detection unit 7400 causes it to transmit ultrasonic waves, electromagnetic waves, or the like and receives information on received reflective waves. The vehicle outside information detection unit 7400 may perform object detection processing or distance detection processing for people, vehicles, obstacles, signs, characters on a road surface, or the like on the basis of the received information. The vehicle outside information detection unit 7400 may perform environment recognition processing for recognizing rainfall, fog, road surface states, or the like on the basis of the received information. The vehicle outside information detection unit 7400 may calculate a distance to an object outside the vehicle on the basis of the received information.

In addition, the vehicle outside information detection unit 7400 may perform image recognition processing or distance detection processing for recognizing people, vehicles, obstacles, signs, characters on a road surface on the basis of received image data. The vehicle outside information detection unit 7400 may perform processing such as distortion correction or positioning on the received image data or combine image data captured by different imaging units 7410 to generate a bird's eye view image or a panorama image. The vehicle outside information detection unit 7400 may perform view conversion processing using image data captured by different imaging units 7410.

The in-vehicle information detection unit 7500 detects information on the inside of the vehicle. For example, a driver state detector 7510 that detects a state of a driver may be connected to the in-vehicle information detection unit 7500. The driver state detector 7510 may include a camera that images the driver, a biometric sensor that detects biometric information of the driver, a microphone that collects sounds in the vehicle cabin, or the like. For example, the biometric sensor may be provided at a seat or a steering wheel and detect biometric information on a passenger sitting on the seat or the driver holding the steering wheel. The in-vehicle information detection unit 7500 may calculate a degree of fatigue or a degree of concentration of the driver or determine whether the driver does not doze on the basis of detected information input from the driver state detector 7510. The in-vehicle information detection unit 7500 may perform processing such as noise cancellation processing on collected audio signals.

The integrated control unit 7600 controls overall operations in the vehicle control system 7000 according to various programs. An input unit 7800 is connected to the integrated control unit 7600. For example, the input unit 7800 may be realized by a device through which a passenger can operate input, such as a touch panel, buttons, a microphone, a switch, or a lever. Data obtained through voice recognition of a voice input through the microphone may be input to the integrated control unit 7600. For example, the input unit 7800 may be a remote control device using infrared rays or other radio waves or an external connection apparatus such as a cellular phone or a personal digital assistance (PDA) in response to an operation of the vehicle control system 7000. The input unit 7800 may be a camera, for example. In this case, a passenger can input information according to a gesture. Alternatively, data obtained by detecting a motion of a wearable device worn by the passenger may be input. Further, the input unit 7800 may include, for example, an input control circuit or the like which generates an input signal on the basis of information input by a passenger or the like using the input unit 7800 and outputs the input signal to the integrated control unit 7600. The passenger or the like inputs various types of data or instructs a processing operation to the vehicle control system 7000 by operating the input unit 7800.

The storage unit 7690 may include a read only memory (ROM) that stores various programs executed by a microcomputer and a random access memory (RAM) that stores various parameters, arithmetic operation results, sensor values, or the like. In addition, the storage unit 7690 may be realized by a magnetic storage device such as a hard disc drive (HDD), a semiconductor storage device, an optical storage device, a magneto-optical storage device, or the like.

The general-purpose communication I/F 7620 mediates communication with various apparatuses present in an external environment 7750. The general-purpose communication I/F 7620 may be provided with a cellular communication protocol such as GSM (registered trademark) (Global System of Mobile communications), WiMAX (registered trademark), a LTE (registered trademark) (Long Term Evolution), or LTE-A (LTE-Advanced), or other wireless communication protocols such as a wireless LAN (also referred to as Wi-Fi (registered trademark)) and Bluetooth (registered trademark). For example, the general-purpose communication I/F 7620 may be connected to an apparatus (e.g., an application server or a control server) present on an external network (e.g., the Internet, a cloud network, or an exclusive network for a business operator) through a base station or an access point. In addition, the general-purpose communication I/F 7620 may be connected to a terminal (e.g., a terminal of a driver, a pedestrian, or a store, or a machine type communication (MTC) terminal) present in proximity to the vehicle, for example, using the peer-to-peer (P2P) technology.

The dedicated communication I/F 7630 is a communication I/F that supports a communication protocol arranged for the purpose of use in the vehicle. For example, the dedicated communication I/F 7630 may be provided with WAVE (Wireless Access in Vehicle Environment) which is a combination of IEEE 802.11p that is a lower layer and IEEE 1609 that is an upper layer, DSRC (Dedicated Short Range Communications), or a standard protocol such as a cellular communication protocol. Typically, the dedicated communication I/F 7630 performs V2X communication that is a concept including one or more of vehicle-to-vehicle communication, vehicle-to-infrastructure communication, vehicle-to-home communication, and vehicle-to-pedestrian communication.

The positioning unit 7640 may receive a global navigation satellite system (GNSS) signal (e.g., a global positioning system (GPS) signal from a GPS satellite) from a GNSS satellite, execute positioning, and generate position information including the latitude, longitude, and altitude of the vehicle, for example. Meanwhile, the positioning unit 7640 may identify a current position according to exchange of signals with a wireless access point or acquire position information from a terminal such as a cellular phone, a PHS, or a smartphone having a positioning function.

The beacon receiver 7650 may receive radio waves or electromagnetic waves transmitted from a radio station installed on a road, acquire information such as a current position, congestion, prohibition of passing, or time required, for example. Meanwhile, the function of the beacon receiver 7650 may be included in the aforementioned dedicated communication I/F 7630.

The in-vehicle apparatus I/F 7660 is a communication interface that mediates connection between the microcomputer 7610 and various in-vehicle apparatuses 7760 present in the vehicle. The in-vehicle apparatus I/F 7660 may establish wireless connection using a wireless communication protocol such as a wireless LAN, Bluetooth (registered trademark), NFC (Near Field Communication), or WUSB (Wireless USB). In addition, the in-vehicle apparatus I/F 7660 may establish wired connection such as a USB (Universal Serial Bus), HDMI (registered trademark) (High-Definition Multimedia Interface), or MHL (Mobile High-definition Link) through a connection terminal (and a cable if necessary) which is not illustrated. The in-vehicle apparatuses 7760 may include, for example, at least one of a mobile apparatus or a wearable apparatus carried by a passenger, or an information apparatus brought in or attached to the vehicle. In addition, the in-vehicle apparatuses 7760 may include a navigation device that searches a route to an arbitrary destination. The in-vehicle apparatus I/F 7660 exchanges control signals or data signals with these in-vehicle apparatuses 7760.

The on-board network I/F 7680 is an interface that mediates communication between the microcomputer 7610 and the communication network 7010. The on-board network I/F 7680 transmits/receives signals and the like according to a predetermined protocol supported by the communication network 7010.

The microcomputer 7610 of the integrated control unit 7600 controls the vehicle control system 7000 according to various programs on the basis of information acquired through at least one of the general-purpose communication I/F 7620, the dedicated communication I/F 7630, the positioning unit 7640, the beacon receiver 7650, the in-vehicle apparatus I/F 7660, and the on-board network I/F 7680. For example, the microcomputer 7610 may calculate a control target value of the driving power generation device, the steering mechanism, or the brake device on the basis of acquired information on the inside or outside of the vehicle and output a control instruction to the driving system control unit 7100. For example, the microcomputer 7610 may perform cooperative control for the purpose of realizing a function of an advanced driver assistance system (ADAS) including collision avoidance or shock mitigation of a vehicle, following travel based on a distance between vehicles, constant vehicle speed travel, vehicle collision warning, vehicle lane deviation warning, or the like. In addition, the microcomputer 7610 may perform cooperative control for the purpose of automatic driving or the like for autonomous travel without depending on an operation of a driver by controlling the driving power generation device, the steering mechanism, the brake device, or the like on the basis of acquired information on surroundings of the vehicle.

The microcomputer 7610 may generate 3-dimensional distance information between the vehicle and an object such as a surrounding structure or person on the basis of information acquired through at least one of the general-purpose communication I/F 7620, the dedicated communication I/F 7630, the positioning unit 7640, the beacon receiver 7650, the in-vehicle apparatus I/F 7660, and the on-board network I/F 7680 and generate local map information including information on surroundings of a current position of the vehicle. In addition, the microcomputer 7610 may predict a risk such as collision of a vehicle, proximity of a pedestrian or the like, entry to a road on which passing is prohibited, or the like and generate a warning signal on the basis of acquired information. The warning signal may be, for example, a signal for generating a warning sound or turning on a warning lamp.

The audio image output unit 7670 transmits at least one of an audio output signal and an image output signal to an output device capable of visually or acoustically notifying a passenger of the vehicle or the outside of the vehicle of information. In the example of Fig. 19, an audio speaker 7710, a display unit 7720, and an instrument panel 7730 are exemplified as output devices. The display unit 7720 may include, for example, at least one of an on-board display and a head-up display. The display unit 7720 may have an augmented reality (AR) display function. Output devices may be wearable devices such as a headphone and a glasses type display worn by a passenger, and other devices such as a projector and a lamp in addition to the aforementioned devices. When the output device is a display device, the display device visually displays results obtained through various types of processing performed by the microcomputer 7610 or information received from other control units in various forms such as text, an image, a table, and a graph. In addition, when the output device is an audio output device, the audio output device converts an audio signal composed of reproduced audio data or acoustic data into an analog signal and acoustically outputs the analog signal.

Meanwhile, in the example illustrated in Fig. 19, at least two control units connected through the communication network 7010 may be integrated into a single control unit. Alternatively, an individual control unit may be composed of a plurality of control units. Further, the vehicle control system 7000 may include additional control unit which is not illustrated. In addition, in the aforementioned description, some or all functions executed by any control unit may be executed by other control units. That is, if transmission and reception of information are performed through the communication network 7010, predetermined arithmetic operation processing may be performed by any control unit. Likewise, a sensor or a device connected to any control unit may be connected to another control unit, and a plurality of control units may transmit/receive detected information to/from each other through the communication network 7010.

In the vehicle control system 7000 described above, the distance measurement device 1 according to the present embodiment described using Fig. 20 can be applied to the vehicle outside information detector 7420 of the application example illustrated in Fig. 19. For example, a distance to an obstacle in front of the vehicle 7900 can be calculated through the distance measurement device 1.

Meanwhile, the present technology can take the following configurations.
(1) A distance measurement device including:
   a light source that emits light;
   a reflective object disposed at a position of a predetermined distance along a path of light from the light source;
   a light-receiving element that receives respective reflective lights from the reflective object and a target on the path;
   a first time measurement unit that measures a first time from when first light is emitted from the light source to when the reflective light from the reflective object is received by the light-receiving element;
   a second time measurement unit that measures a second time from when second light is emitted from the light source to when the reflective light from the target is received by the light-receiving element; and
   a distance calculation unit that calculates a distance from the light source to the target along a path of the second light on the basis of the predetermined distance, the first time, and the second time.
(2) The distance measurement device according to (1), wherein the distance calculation unit includes a first distance calculator that calculates a first distance from the light source to the reflective object along a path of the first light on the basis of the first time, and a second distance calculator that calculates a distance from the light source to the target along the path of the second light on the basis of the predetermined distance, the first distance, and the second time.
(3) The distance measurement device according to (1) or (2), wherein the reflective object is disposed on the path of the light emitted from the light source and includes a shutter mechanism that opens/closes a shutter screen.
(4) The distance measurement device according to (3), wherein the shutter screen is a screen of which entire area on the side of the light source is a reflective region reflecting the first light, a screen on which a plurality of elongated passing regions through which the second light passes and a plurality of elongated reflective regions are arranged in a stripe pattern, a screen on which a plurality of passing regions through which the second light passes and a plurality of reflective regions are arranged in a checkered pattern, or a screen on which a plurality of passing regions through which the second light passes and a plurality of reflective regions are randomly arranged.
(5) The distance measurement device according to (1), wherein the reflective object is a transmission type liquid crystal panel disposed on the path of the light emitted from the light source.
(6) The distance measurement device according to (1), wherein the reflective object is a fixed member having a reflective region reflecting the first light along a circumferential part of at least a part and having a passing region passing the second light in other parts.
(7) The distance measurement device according to (2), wherein the first distance calculated by the first distance calculator is an average value of distances from the light source to a plurality of points on the reflective object, a shortest distance among distances from the light source to a plurality of points on the reflective object, or a distance from the light source to a representative position on the reflective object.
(8) The distance measurement device according to any of (1) to (7), wherein the reflective object has a high-reflectivity region having a reflectivity equal to or greater than a predetermined value and a low-reflectivity region having a reflectivity less than the predetermined value,
   the light-receiving elements include a plurality of light-receiving elements, and the distance measurement device includes a histogram generator that generates histograms based on a time from when light is emitted from the light source to when the light is received by the light-receiving elements, and an adjustment unit that adjusts detection efficiency of the light-receiving elements such that at least one of the plurality of light-receiving elements does not respond to the light reflected by the high-reflectivity region and a peak value appears in each of the plurality of histograms generated for the plurality of light-receiving elements on the basis of the light reflected by the low-reflectivity region.
(9) The distance measurement device according to (4), wherein the reflective region includes a plurality of parts having different reflectivities, and
   the distance measurement device includes a histogram generator that generates a histogram based on a time from when the light source emits light to when the light is received by the light-receiving element, and a determination unit that determines whether a peak value of the histogram generated on the basis of the light reflected by the reflective region is within a normal range predetermined for each reflectivity of the reflective region and determines that the light source has failed when the peak value is beyond the normal range.
(10) The distance measurement device according to any of (1) to (9), including a micro-mirror that reflects the light emitted from the light source,
   wherein the micro-mirror and the reflective object are integrally formed.
(11) A distance measurement method including:
   measuring a first time from when first light is emitted from a light source to when reflective light from a reflective object disposed at a position of a predetermined distance along a path of the first light from the light source
   is received by a light-receiving element;
   measuring a second time from when second light is emitted from the light source to when the reflective light from a target on a path of the second light is received by the light-receiving element; and
   calculating a distance from the light source to the target along the path of the second light on the basis of the predetermined distance, the first time, and the second time.

### [Reference Signs List]

- 1: Distance measurement device
- 2: Light projection unit
- 3: Reflective object
- 4: Light-receiving unit
- 5: Distance measurement processing unit
- 6: Control unit
- 7: Communication IF unit
- 8: Light, first light, second light
- 9: Light source
- 10: Emitter lens
- 11: Light projection mirror
- 12: Micro-mirror
- 13: Polygon mirror
- 14: MEMS mirror
- 15: Shutter screen
- 16: Shutter mechanism
- 17: Reflective region
- 17a: High-reflectivity region
- 17b: Low-reflective region
- 18: Reflective light
- 19: Target
- 20: Passing region
- 21: Receiver lens
- 22: Light-receiving element
- 23: TDC
- 24: Histogram generator
- 25: Distance calculation unit
- 26: First time measurement unit
- 27: Second time measurement unit
- 28: First distance calculator
- 29: Second distance calculator
- 30: Transmission type liquid crystal panel
- 31: Fixed member
- 32: Adjustment unit
- 33: Determination unit
- 34: Storage device
- 35: Distance calculation unit
- 7000: Vehicle control system
- 7010: Communication network
- 7100: Driving system control unit
- 7110: Vehicle state detector
- 7200: Body system control unit
- 7300: Battery control unit
- 7310: Secondary battery
- 7400: Vehicle outside information detection unit
- 7410: Imaging unit
- 7420: Vehicle outside information detector
- 7500: In-vehicle information detection unit
- 7510: Driver state detector
- 7600: Integrated control unit
- 7610: Microcomputer
- 7620: General-purpose communication I/F
- 7630: Dedicated communication I/F
- 7640: Positioning unit
- 7650: Beacon receiver
- 7660: In-vehicle apparatus I/F
- 7670: Audio image output unit
- 7680: On-board network I/F
- 7690: Storage unit
- 7710: Audio speaker
- 7720: Display unit
- 7730: Instrument panel
- 7750: External environment
- 7760: In-vehicle apparatus
- 7800: Input unit
- 7900: Vehicle
- 7910, 7912, 7914, 7916, 7918: Imaging unit
- 7920, 7921, 7922, 7923, 7924, 7925, 7926, 7927, 7928, 7929, 7930: Vehicle
- outside: information detector

## Claims

1. A distance measurement device comprising:
a light source that emits light;
a reflective object disposed at a position of a predetermined distance along a path of the light from the light source;
a light-receiving element that receives respective reflective lights from the reflective object and a target on the path;
a first time measurement unit that measures a first time from when first light is emitted from the light source to when the reflective light from the reflective object is received by the light-receiving element;
a second time measurement unit that measures a second time from when second light is emitted from the light source to when the reflective light from the target is received by the light-receiving element; and
a distance calculation unit that calculates a distance from the light source to the target along a path of the second light on the basis of the predetermined distance, the first time, and the second time.

2. The distance measurement device according to claim 1, wherein the distance calculation unit includes
a first distance calculator that calculates a first distance from the light source to the reflective object along a path of the first light on the basis of the first time, and
a second distance calculator that calculates a distance from the light source to the target along the path of the second light on the basis of the predetermined distance, the first distance, and the second time.

3. The distance measurement device according to claim 1, wherein the reflective object is disposed on the path of the light emitted from the light source and includes a shutter mechanism that opens/closes a shutter screen.

4. The distance measurement device according to claim 3, wherein the shutter screen is a screen of which an entire area on the side of the light source is a reflective region reflecting the first light, a screen on which a plurality of elongated passing regions through which the second light passes and a plurality of elongated reflective regions are arranged in a stripe pattern, a screen on which a plurality of passing regions through which the second light passes and a plurality of reflective regions are arranged in a checkered pattern, or a screen on which a plurality of passing regions through which the second light passes and a plurality of reflective regions are randomly arranged.

5. The distance measurement device according to claim 1, wherein the reflective object is a transmission type liquid crystal panel disposed on the path of the light emitted from the light source.

6. The distance measurement device according to claim 1, wherein the reflective object is a fixed member having a reflective region reflecting the first light along a circumferential part of at least a part and having a passing region passing the second light in other parts.

7. The distance measurement device according to claim 2, wherein the first distance calculated by the first distance calculator is an average value of distances from the light source to a plurality of points on the reflective object, a shortest distance among distances from the light source to a plurality of points on the reflective object, or a distance from the light source to a representative position on the reflective object.

8. The distance measurement device according to claim 1, wherein
the reflective object has a high-reflectivity region having a reflectivity equal to or greater than a predetermined value and a low-reflectivity region having a reflectivity less than the predetermined value,
the light-receiving elements include a plurality of light-receiving elements, and
the distance measurement device comprises a histogram generator that generates histograms based on a time from when light is emitted from the light source to when the light is received by the light-receiving elements, and
an adjustment unit that adjusts a detection efficiency of the light-receiving elements such that at least one of the plurality of light-receiving elements does not respond to the light reflected by the high-reflectivity region and a peak value appears in each of the plurality of histograms generated for the plurality of light-receiving elements on the basis of the light reflected by the low-reflectivity region.

9. The distance measurement device according to claim 4, wherein
the reflective region includes a plurality of parts having different reflectivities, and
the distance measurement device comprises a histogram generator that generates a histogram based on a time from when the light source emits light to when the light is received by the light-receiving element, and
a determination unit that determines whether a peak value of the histogram generated on the basis of the light reflected by the reflective region is within a normal range predetermined for each reflectivity of the reflective region and
determines that the light source has failed when the peak value is beyond the normal range.

10. The distance measurement device according to claim 1, comprising a micro-mirror that reflects the light emitted from the light source,
wherein the micro-mirror and the reflective object are integrally formed.

11. A distance measurement method comprising:
measuring a first time from when first light is emitted from a light source to when reflective light from a reflective object disposed at a position of a predetermined distance along a path of the first light from the light source is received by a light-receiving element;
measuring a second time from when second light is emitted from the light source to when the reflective light from a target on a path of the second light is received by the light-receiving element; and
calculating a distance from the light source to the target along the path of the second light on the basis of the predetermined distance, the first time, and the second time.
